# EUROPÄISCHE PATENTSCHRIFT

(11) **EP 2 569 953 B1**
(45) Veröffentlichungstag und Bekanntmachung des Hinweises auf die Patenterteilung: **27.11.2013**
(21) Anmeldenummer: 11727123.9
(22) Anmeldetag: 17.06.2011
(51) Int. Cl.: H04N 17/00, H04N 13/00, G06T 7/00

(54) **OPTISCHE SELBSTDIAGNOSE EINES STEREOSKOPISCHEN KAMERASYSTEMS**
OPTICAL SELF-DIAGNOSIS OF A STEREOSCOPIC CAMERA SYSTEM
AUTO-DIAGNOSE OPTIQUE D'UN SYSTÈME DE CAMÉRAS STÉRÉOSCOPIQUES

(30) Priorität: 18.06.2010 DE 102010024666
(43) Veröffentlichungstag der Anmeldung: 20.03.2013
(73) Patentinhaber: Hella KGaA Hueck & Co., 59552 Lippstadt (DE)
(72) Erfinder: SONG, Miao, 10969 Berlin (DE); LOJEWSKI, Björn, 10969 Berlin (DE)
(74) Vertreter: Lohr, Georg
(86) Internationale Anmeldenummer: PCT/EP2011/003053
(87) Internationale Veröffentlichungsnummer: WO 2011/157454

(56) Entgegenhaltungen:
- WO-A1-2004/045912
- DE-A1-102008 046 505
- DE-B3-102007 025 373
- US-A- 5 835 613
- HIRSCHMULLER H ED - GANG PAN ET AL: "Accurate and Efficient Stereo Processing by Semi-Global Matching and Mutual Information", COMPUTER VISION AND PATTERN RECOGNITION, 2005 IEEE COMPUTER SOCIETY CONFERENCE ON, IEEE, PISCATAWAY, NJ, USA, Bd. 2, 20. Juni 2005 (2005-06-20), Seiten 807-814, XP010817537, DOI: 10.1109/CVPR.2005.56 ISBN: 978-0-7695-2372-9

## Beschreibung

Die vorliegende Erfindung betrifft ein Verfahren zur optischen Selbstdiagnose eines Kamerasystems und ein Kamerasystem zur Durchführung eines solchen Verfahrens.

Kamerasysteme, speziell Stereokamerasysteme, reagieren empfindlich auf Verschmutzungen jeglicher Art. Wenn das Kamerasystem Bestandteil eines Überwachungssystems ist, das aufgenommene Bilder automatisch auswertet, z. B. ein Personenzählsystem, besteht die Gefahr, dass dadurch Detektionsfehler auftreten und unbemerkt bleiben. Um eine Beeinträchtigung der Bildqualität und dadurch verursachte Detektionsfehler zu vermeiden, können derartige Systeme daher Selbstprüfungsfunktionen enthalten, welche überprüfen, ob eine Verschmutzung oder Verdeckung der Optiken vorliegt, und entsprechende Warnsignale ausgeben. Die meisten der bisher entwickelten Verfahren zur optischen Selbstdiagnose eines Kamerasystems basieren auf direkt von der Kamera gelieferten Graubildern und benötigen zur Auswertung eine hohe Rechenleistung und belegen einen enormen Speicherplatz.

Aus dem Stand der Technik sind bereits Verfahren zur optischen Selbstdiagnose von Kamerasystemen bekannt. So wird beispielsweise in der Druckschrift DE 10 2006 016 774 A1 ein Regensensor beschrieben, bei dem aufgrund einer Streuung der Pixelintensität Regen als Bedeckung des Kamerabildes gemessen wird.

Eine derartige Lösung weist, wie bereits erwähnt, den Nachteil auf, dass eine hohe Rechenleistung sowie eine hohe Speicherkapazität vorhanden sein muss, um die Bilder auszuwerten.

WO 2004/045912 offenbart einen Bildgeber zur Sitzbelegungserkennung mit einer Selbstüberwachung. Zur Selbstüberwachung werden von einem Bildgeber erfasste Bilder ausgewertet und dadurch ermittelte Werte mit Grenzwerten verglichen.

DE 10 2007 025 373 B3 offenbart eine visuelle Überwachungsvorrichtung insbesondere zur Messung der Entfernung von Objekten. Änderungen der gemessenen Entfernungen werden einer Plausibilitätsprüfung unterzogen. Unplausible Änderungen werden als Indikator für eine Fehlfunktion verwendet.

US 5,835,613 schlägt vor Sitzplätze in Kraftfahrzeugen optisch zu Überwachen und Airbags bei einem Unfall nur auszulösen, wenn die der entsprechende Sitzplatz besetzt ist und die Entfernung des Passagiers zum Airbag genügt, um schwere Verletzungen durch den Airbag auszuschließen. Für die optische Überwachung werden Kameras eingesetzt. Um die Funktion der Kameras zu überwachen wird das Bild jeder der Kameras mit einem zuvor gespeicherten Bild verglichen, um beim Fehlen bestimmter Eigenschaften des Bildes, sogenannter "key features", eine Warnmeldung auszugeben.

Der Aufsatz *"*Accurate and Efficient Stereo Processing by Semi-Global Matching and Mutual Information" (Heiko Hirschmüller, in Computer Vision and Pattern Recognition 2005, IEEE Computer Society Conference; vol. 2, pages 807-814) behandelt Echtzeit Mustererkennung, die auf einem Abgleich (matching) von Teilbildern einer Stereokamera beruht. Es wird ein Verfahren vorgeschlagen, das darauf beruht in den Teilbildern enthaltene Informationen Pixel für Pixel abzugleichen und anschließend an eine globale 2D-Stetigkeitsbedingung anzupassen, wozu mehrere 1D-Stetigkeitsbedingungen kombiniert werden.

Der vorliegenden Erfindung liegt damit die Aufgabe zugrunde, ein Verfahren zur optischen Selbstdiagnose eines Kamerasystems zu entwickeln, das die genannten Nachteile vermeidet, mit dem also durch einen einfachen Algorithmus eine zuverlässige Selbstdiagnose möglich ist.

Diese Aufgabe wird erfindungsgemäß gelöst durch ein Verfahren zur optischen Selbstdiagnose eines Kamerasystems mit den Merkmalen des Hauptanspruchs sowie durch ein Kamerasystem zur Durchführung dieses Verfahrens gemäß Anspruch 10.

Ein derartiges Verfahren zur optischen Selbstdiagnose eines Kamerasystems zur Aufnahme von aus jeweils mindestens zwei Teilbildern gewonnenen Stereobildern, umfasst folgende Schritte: Zunächst wird mit dem Kamerasystem aus unterschiedlichen Perspektiven zumindest ein erstes Teilbild und ein zweites, zum ersten Teilbild komplementäres Teilbild eines Objektraums aufgenommen. Komplementär bedeutet hier, dass zwar beide Bilder das gleiche Objekt abbilden, allerdings das Objekt aus verschiedenen Perspektiven abgebildet wird. Aus diesen beiden Teilbildern lässt sich ein Stereobild gewinnen, wobei unter dem Begriff "Stereobild" ein Bild mit im Bild enthaltenen Tiefeninformationen verstanden werden soll. Im nächsten Schritt des Verfahrens wird ein Tiefenbild (z. B. eine Disparitätskarte) erstellt. Das Erstellen des Tiefenbilds erfolgt aus dem ersten und dem zweiten Teilbild anhand von Parallaxen zwischen einander korrespondierenden Bildpunkten aus den Teilbildern. Als Maß für die Parallaxe werden Disparitätswerte bestimmt.

Nachfolgend wird eine Anzahl gültiger Disparitätswerte ermittelt. Ein gültiger Disparitätswert ist hierbei definiert als Disparitätswert, der für zwei einander zugeordnete Bildpunkte der Teilbilder ermittelt wird, die eindeutig oder zumindest mit einer definierten Wahrscheinlichkeit als einander korrespondierend identifiziert werden. Um festzustellen, ob zwei Bildpunkte in diesem Sinne zumindest mit einer definierten Wahrscheinlichkeit einander korrespondieren, kann dabei ein beliebiges Zuverlässigkeitsmaß verwendet werden. In Abhängigkeit von der Anzahl der bestimmten Disparitätswerte kann schließlich ein Warnsignal ausgegeben werden.

Ein derartiges Verfahren bietet den Vorteil, dass die zu verarbeitende Datenmenge durch die Berechnung des Tiefenbilds wesentlich reduziert wird und somit eine schnellere Verarbeitung der Daten erfolgen kann. Besonders vorteilhaft ist, dass bei Verwendung einer Disparitätskarte als Tiefenbild eine derartige Karte in der Regel bereits automatisch von Stereokameras berechnet wird. Aus dem Tiefenbild kann zuverlässig auf Verunreinigungen, Verschmutzung, schlechte Lichtverhältnisse und Abdeckung der Kameraoptiken, welche die Bildqualität beeinträchtigen, zurückgeschlossen werden. Ein aufwendiges Auswerten von Bildinhalten der einzelnen Teilbilder erübrigt sich daher.

Vorteilhafte Weiterbildungen des Verfahrens werden in den Unteransprüchen beschrieben.

Das Tiefenbild kann, wie bereits erwähnt, eine Disparitätskarte sein, die durch ein so genanntes "Matching-Verfahren" erstellt wird, bei welchem durch Zuordnen von Bildpunkten des ersten Teilbilds zu korrespondierenden Bildpunkten des zweiten Teilbilds Disparitätswerte als Maß für eine Parallaxe zwischen korrespondierenden Bildpunkten beider Teilbilder bestimmt werden. Derartige Matching-Verfahren sind aus dem Stand der Technik bekannt und werden beispielsweise in DE 10 2008 046 505 A1 beschrieben. Die mit dem Matching-Verfahren erhaltenen Disparitätswerte können schließlich in einer Disparitätskarte dargestellt werden. Bei Durchführung eines Matching-Verfahrens wird ein gültiger Disparitätswert durch vom Verfahren als eindeutig oder zumindest mit einer definierten Wahrscheinlichkeit einander korrespondierende Bildpunkte definiert.

In vorteilhafter Weise erfolgt das Ausgeben des Warnsignals bedingt durch einen Vergleich der Anzahl gültiger Disparitätswerte mit einem vorgegebenen Schwellwert, wobei bei Unterschreiten des vorgegebenen Schwellwerts das Warnsignal ausgegeben wird.

Eine vorteilhafte Weiterbildung sieht vor, dass eine Installationsphase vorgesehen ist, in der eine Kalibrierung von zur Selbstdiagnose des Kamerasystems verwendeten Parametern erfolgt. Die Kalibrierung kann derart ausgeführt werden, dass eine durchschnittliche Anzahl gültiger Disparitätswerte anhand eines Testobjekts ermittelt wird, wobei mittels der so ermittelten Anzahl gültiger Disparitätswerte der Schwellwert berechnet wird. Da derartige Kamerasysteme häufig in unterschiedlichen Umgebungen eingesetzt werden, kann ein festgelegter Schwellwert nicht immer an die Umgebung angepasst sein. Daher bietet das Vorsehen einer Installationsphase den Vorteil, dass das Verfahren an unterschiedliche Umgebungen anpassbar und folglich das Kamerasystem in unterschiedlichen Umgebungen zuverlässig verwendbar ist.

In besonders vorteilhafter Weise kann der Schwellwert durch Multiplikation der in der Installationsphase ermittelten durchschnittlichen Anzahl von gültigen Disparitätswerten mit einem Faktor berechnet werden, der größer als 0 ist. Dies erlaubt die Anpassung an unterschiedliche Umgebungsverhältnisse, wie beispielsweise unterschiedliche Lichtverhältnisse, mit ausgesprochen geringem Aufwand.

Das Aufnehmen der mindestens zwei Teilbilder des Objektraums aus unterschiedlicher Perspektive kann vorteilhaft gleichzeitig erfolgen. Somit wird ausgeschlossen, dass zeitliche Veränderungen des Objektraums die Aufnahme verfälschen.

Eine weitere vorteilhafte Weiterbildung sieht vor, dass das Matching-Verfahren eine Fourier-Transformation umfasst. Durch eine derartige Fourier-Transformation, die bevorzugt zweidimensional ausgeführt wird, und Auswertung der Ortsfrequenzen können störende lokale Schärfe- und Kontraständerungen bei der Auswertung berücksichtigt werden.

Eine besonders vorteilhafte Weiterbildung sieht vor, dass über eine bestimmte Zeitspanne mehrere Disparitätskarten berechnet und miteinander verglichen werden, wobei ein Warnsignal nur dann ausgegeben wird, wenn der vorgegebene Schwellwert gültiger Disparitätswerte in einer vorbestimmten Anzahl berechneter Disparitätskarten unterschritten wird. Somit kann eine zeitliche Entwicklung des Objektraums nachverfolgt werden, während nur vorübergehende Störungen, z. B. eine eventuell nur kurzzeitig wirksame Verdunkelung eines Objektivs, nicht berücksichtigt wird.

Entsprechend vorteilhaft ist ein zur Durchführung eines derartigen Verfahrens geeignetes Kamerasystem, das eine Stereokamera mit mindestens zwei Objektiven und Bildsensoren zum Aufnehmen der mindestens zwei Teilbilder, eine Auswerteeinheit zum Durchführen des Matching-Verfahrens sowie zum Berechnen der Disparitätswerte und eine Ausgabeeinheit zum Ausgeben des Warnsignals umfasst. Die Auswerteeinheit kann hierbei beispielsweise ein in der Stereokamera integrierter Schaltkreis sein. Die Ausgabeeinheit kann z. B. durch ein Display oder eine andere Anzeigeeinheit gegeben sein, im Falle eines akustisch ausgebbaren Warnsignals kann auch ein Lautsprecher zum Einsatz kommen. Auswerte- und Ausgabeeinheit können auch durch einen Computer realisiert sein.

Die Vorteile der Erfindung kommen besonders zur Geltung, wenn es sich bei dem Kamerasystem um ein Überwachungssystem mit automatischer Bildauswertung, z. B. um ein Personenzählsystem, handelt.

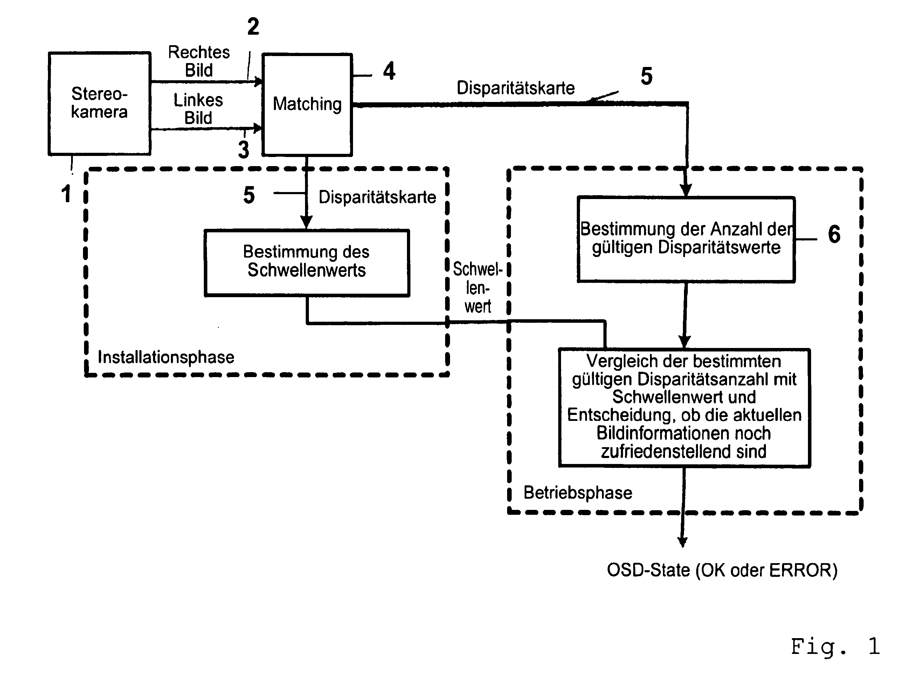

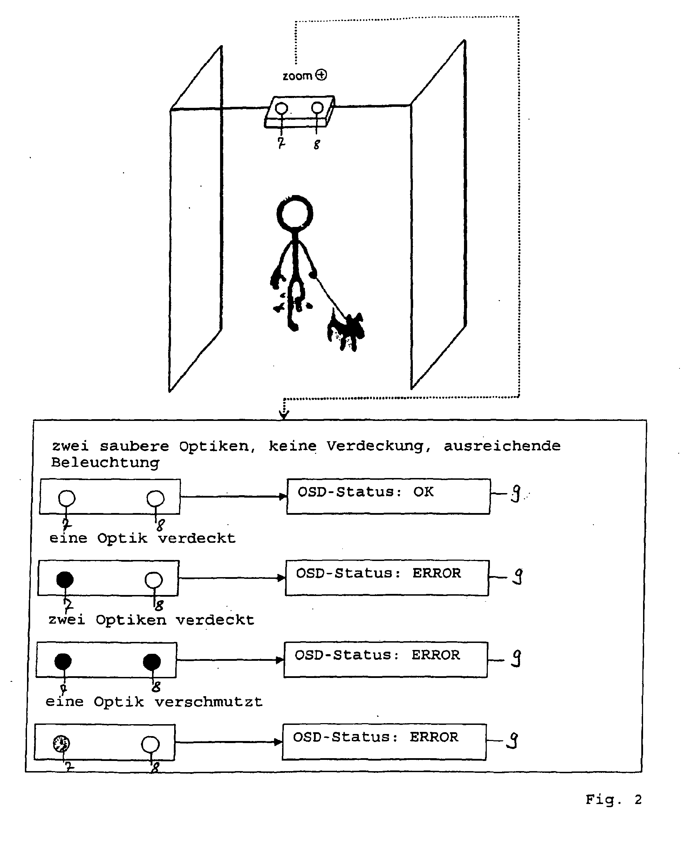

Ein Ausführungsbeispiel der Erfindung wird nachfolgend anhand der Fign. 1 und 2 erläutert. Es zeigen:
- Fig. 1: einen schematischen Ablaufplan eines Verfahrens zur Selbstdiagnose eines Kamerasystems mit einer Stereokamera und
- Fig. 2: eine schematische Darstellung der verwendeten Stereokamera sowie ein Ausgabeschema des Kamerasystems.

In Fig. 1 ist ein schematischer Funktionsablauf eines Verfahrens dargestellt, mit dem ein Kamerasystem selbsttätig auf Funktionsfähigkeit getestet werden kann. Bei diesem Kamerasystem handelt es sich um ein Auszählsystem. Eine Stereokamera 1 des Kamerasystems nimmt gleichzeitig ein rechtes Teilbild 2 und ein linkes Teilbild 3 eines Objekts aus unterschiedlichen Perspektiven auf. Die beiden Teilbilder 2, 3 werden zunächst durch einen Algorithmus rektifiziert, d. h. entzerrt und derart transformiert, als wären sie von einem idealen, parallel ausgerichteten Stereokamerasystem aufgenommen. Das rechte Teilbild 2 und das linke Teilbild 3 werden in einem Matching-Verfahren 4 zeilenweise miteinander verglichen, und es werden einander entsprechende Bildpunkte in beiden Teilbildern 2 und 3 ermittelt. Jedem dieser Bildpunkte wird ein Disparitätswert zugeordnet, der als horizontale Parallaxe zwischen der Position der einander entsprechenden Bildpunkte in den beiden Teilbildern 2 und 3 definiert ist. Aus den Disparitätswerten wird ein Tiefenbild, in diesem Fall also eine Disparitätskarte 5, ermittelt.

Aus dieser Disparitätskarte 5 wird in einem weiteren Schritt 6 eine Anzahl der gültigen Disparitätswerte ermittelt. Gültige Disparitätswerte sind dabei sämtliche Disparitätswerte, die für zwei Bildpunkte aus den beiden Teilbildern 2 und 3 ermittelt werden, die durch das Matching-Verfahren 4 als mit hinreichend großer Wahrscheinlichkeit korrespondierend einander zugeordnet werden. Sollte also beispielsweise ein Objektiv der Stereokamera 1 verdeckt oder verschmutzt sein, so werden in zumindest einem Bereich dieses Teilbildes keine gültigen Disparitätswerte ermittelt werden können, da für Bildpunkte in diesem Bereich der jeweils entsprechende Bildpunkt im anderen Teilbild nicht gefunden werden kann. Somit liegt eine geringe Anzahl nicht gültiger Disparitätswerte vor. Es kann vorgesehen sein, dass Bildpunkten, für die das zutrifft, der Disparitätswert "0" zugeordnet wird, sodass die gültigen Disparitätswerte alle von "0" verschiedenen Disparitätswerte aus der Disparitätskarte 5 sind. Um lokal begrenzte, störende Schärfeund Kontraständerungen eines Teilbilds zu berücksichtigen, kann während des Matching-Verfahrens 4 eine Fourier-Transformation durchgeführt werden und das Matching-Verfahren 4 mit den daraus erhaltenen Daten weitergeführt werden.

Die Anzahl der gültigen Disparitätswerte wird mit dem Schwellwert verglichen, und dabei wird entschieden, ob eine ausreichende Anzahl gültiger Disparitätswerte vorliegt, was darauf zu schließen erlaubt, ob die aktuellen Bildinformationen noch zufriedenstellend sind.

Der Schwellwert wird dabei in einer Installationsphase eine Kalibrierung des Kamerasystems aus der in gleicher Weise erhaltenen Disparitätskarte 5 bestimmt, indem die durchschnittliche Anzahl der gültigen Disparitätswerte aus einer ersten Aufnahme mit einem Faktor von beispielsweise 0,4 multipliziert wird. Nach dem Vergleich der bestimmten gültigen Disparitätswerte mit dem Schwellwert wird ein Status der optischen Selbstdiagnose(OSD-Status) ausgegeben, und zwar entweder eine Meldung, dass keine Beeinträchtigung vorliegt, oder eine Fehlermeldung. Die Fehlermeldung kann dabei optisch und/oder akustisch ausgegeben werden, beispielsweise als Textmeldung auf einem Display oder als Warnton.

Damit singuläre, nur kurzfristig wirksame Störungen nicht bereits das Warnsignal auslösen, soll das Warnsignal nur ausgegeben werden, wenn der vorgegebene Schwellwert gültiger Disparitätswerte in einer vorbestimmten Anzahl berechneter Disparitätskarten unterschritten wird. Hierfür werden zu mehreren Zeitpunkten berechnete Disparitätskarten miteinander verglichen, ist eine Verdeckung und damit einhergehend eine zu niedrige Anzahl gültiger Disparitätswerte nur in einer einzigen Disparitätskarte 5 nachweisbar, während in allen anderen ausgewerteten Daten die Anzahl gültiger Disparitätswerte ausreichend ist, wird das Warnsignal nicht ausgegeben.

Fig. 2 stellt schematisch die verwendete Stereokamera 1 mit einem rechten Objektiv 7 und einem linken Objektiv 8 sowie ein Ausgabeschema der Statusmeldung der optischen Selbstdiagnose dar. Die Stereokamera 1 nimmt mit den Objektiven 7 und 8 und Bildsensoren zwei Teilbilder 2 und 3 des zu betrachtenden Objektraums auf, die sich zu einem Stereobild ergänzen sollen. Das Erstellen des Stereobilds erfolgt dabei durch eine in der Stereokamera 1 enthaltene Auswerteeinheit zum Durchführen des Matching-Verfahrens sowie zum Berechnen der Disparitätswerte. Warnsignale werden durch eine ebenfalls im Stereokamerasystem enthaltene Anzeigeeinheit 9 ausgegeben.

Mögliche Fehler bei der Aufnahme sind im unteren Teil der Fig. 2 dargestellt. In einem ersten Fall sind beide Objektive, also rechtes Objektiv 7 und linkes Objektiv 8, sauber, nicht verdeckt, und die Beleuchtung ist ausreichend. In diesem Fall wird als Status der optischen Selbstdiagnose keine Fehlermeldung ausgegeben. In einem zweiten Fall ist eines der Objektive 7 oder 8 verdeckt. In diesem Fall ermittelt das Verfahren, das bereits weiter oben beschrieben wurde, nicht die nötige Anzahl an gültigen Disparitätswerten, so dass die optische Selbstdiagnose eine Fehlermeldung als Statusanzeige ausgibt. In einem dritten dargestellten Fall sind beide Objektive 7 und 8 verdeckt, so dass auch hier eine Fehlermeldung ausgegeben wird. Im vierten dargestellten Fall ist das Objektiv 8 verschmutzt. Folglich wird auch hier eine Fehlermeldung ausgegeben, weil das Matching-Verfahren 4 wegen der Verschmutzung nicht hinreichend viele Bildpunkte als einander korrespondierend identifizieren kann. Gleiches geschieht auch im hier nicht dargestellten Fall, in dem beide Objektive 7 und 8 verschmutzt sind.

Anhand der Disparitätskarte 5 können globale Fehler (z. B. Vollverdeckung sowie Bildfehler, die aufgrund schlechter Lichtverhältnisse auftreten) und lokale Fehler (z. B. Teilverdeckung) unterschieden werden. Diese Fehler können auch hinsichtlich ihrer Charakteristik, ob also Helligkeitsfehler oder Sensorfehler durch Verdeckung vorliegen, identifiziert werden.

Als Maß für das Auftreten globaler und lokaler Fehler kann die Verteilung und die Häufigkeit ungültiger Disparitätswerte herangezogen werden. Ist eine große Anzahl ungültiger Disparitätswerte in einem Raumbereich konzentriert, liegt dort ein lokaler Fehler aufgrund beispielsweise einer partiellen Verdeckung eines Objektivs vor. Ist die Anzahl ungültiger Disparitätswerte hoch, aber gleichmäßig im Bild verteilt, handelt es sich um einen globalen Fehler, wie z. B. eine Vollverdeckung.

Ist die Funktionalität der Stereokamera 1 in oben dargestellter Weise beeinträchtigt, kann diese deaktiviert werden und die somit frei werdende Rechenleistung zur Diagnose verwendet werden. Bei der Diagnose kann beispielsweise eine Lokalisierung der partiellen Verdeckung, z. B. ein verschmutztes Objektiv, anhand der einzelnen Teilbilder 2, 3 und/oder des Stereobildes geschehen.

Neben den berechneten Disparitätswerten können auch die Wahrscheinlichkeiten, mit denen Bildpunkte einander zugeordnet wurden, gespeichert werden. Anhand dieser Wahrscheinlichkeiten kann wiederum auf globale oder lokale Fehler geschlossen werden, die die korrekte Zuordnung der Bildpunkte erschweren, z. B. bei einer großen Anzahl geringer Wahrscheinlichkeiten der Korrespondenz auf eine ungenügende Beleuchtung oder zu schwachen Kontrast.

In der Folge kann ausgehend von den während der Selbstdiagnose erhaltenen Informationen das Kamerasystem derart eingerichtet sein, eine Veränderung der Einstellungen vorzunehmen, um die festgestellten Fehler zu beseitigen. Diese Veränderungen können dann eine automatische Helligkeitsregelung, neue Kalibrierung, Aktivieren eines automatischen Reinigungssystems oder auch ein Abschalten der Stereobildfunktion und Aufnehmen von Monobildern umfassen. Alternativ zur Veränderung der Einstellungen kann das Vorliegen eines durch das beschriebene Selbstdiagnoseverfahren festgestellten Fehlers als notwendiges Kriterium zur Einleitung weiterer Prüfungsverfahren unter Hinzunahme weiterer Informationen dienen. Das Warnsignal kann also auch ein weiteres Prüfungsverfahren auslösen. Diese weiteren Prüfverfahren können z. B. konventionelle Selbstdiagnoseverfahren auf Basis von Monobildern umfassen.

## Patentansprüche

1. Verfahren der optischen Selbstdiagnose eines Kamerasystems zur Aufnahme von aus jeweils mindestens zwei Teilbildern (2, 3) gewonnenen Stereobildern, welches die folgenden Schritte umfasst:
a. Aufnehmen von zumindest einem ersten Teilbild (2) und einem zweiten, zum ersten Teilbild (2) komplementären Teilbild (3) eines Objekt raums mit dem Kamerasystem aus unterschiedlichen Perspektiven;
b. Erstellen eines Tiefenbilds aus dem ersten Teilbild (2) und dem zweiten Teilbild (3) anhand von Parallaxen zwischen einander korrespondierenden Bildpunkten aus den Teilbildern, wobei als Maß für die Parallaxe Disparitätswerte bestimmt werden;
c. Bestimmen einer Anzahl gültiger Disparitätswerte (6) des Tiefenbilds, wobei ein gültiger Disparitätswert definiert ist als Disparitätswert, der für zwei einander zugeordnete Bildpunkte der Teilbilder (2, 3) ermittelt wird, die eindeutig oder zumindest mit einer definierten Wahrscheinlichkeit als einander korrespondierend identifiziert werden;
d. Ausgeben eines Warnsignals in Abhängigkeit von der Anzahl der bestimmten gültigen Disparitätswerte .

2. Verfahren nach Anspruch 1,
**dadurch gekennzeichnet, dass**
das Tiefenbild eine Disparitätskarte ist, die durch Durchführen eines Matching- Verfahrens (4) erstellt wird, bei welchem durch Zuordnen von Bildpunkten des ersten Teilbilds (2) zu korrespondierenden Bildpunkten des zweiten Teilbilds (3) die Disparitätswerte als Maß für die Parallaxen zwischen den korrespondierenden Bildpunkten beider Teilbilder (2, 3) bestimmt werden.

3. Verfahren nach Anspruch 1,
**dadurch gekennzeichnet, dass**
ein Vergleich der Anzahl gültiger Disparitätswerte mit einem vorgegebenen Schwellwert durchgeführt wird, wobei das Warnsignal bei Unterschreiten des vorgegebenen Schwellwerts ausgegeben wird.

4. Verfahren nach Anspruch 1 bis 3,
**dadurch gekennzeichnet, dass**
eine Installationsphase vorgesehen ist, in der eine Kalibrierung von zur Selbstdiagnose des Kamerasystems verwendeten Parametern erfolgt.

5. Verfahren nach Anspruch 3 mit 4,
**dadurch gekennzeichnet, dass**
in der Installationsphase die Kalibrierung derart durchgeführt wird, dass eine durchschnittliche Anzahl gültiger Disparitätswerte anhand eines Testobjekts ermittelt wird, wobei mittels der so ermittelten Anzahl gültiger Disparitätswerte der Schwellwert berechnet wird.

6. Verfahren nach Anspruch 5,
**dadurch gekennzeichnet, dass**
der Schwellwert durch Multiplikation der in der Installationsphase ermittelten durchschnittlichen Anzahl von gültigen Disparitätswerten mit einem Faktor berechnet wird, der größer als 0 ist.

7. Verfahren nach einem der vorhergehenden Ansprüche,
**dadurch gekennzeichnet, dass**
das Aufnehmen der mindestens zwei Teilbilder (2, 3) des Objektraums aus unterschiedlicher Perspektive gleichzeitig erfolgt.

8. Verfahren nach einem der vorhergehenden Ansprüche,
**dadurch gekennzeichnet, dass**
das Matching-Verfahren (4) eine Fourier-Transformation umfasst.

9. Verfahren nach einem der vorhergehenden Ansprüche,
**dadurch gekennzeichnet, dass**
über eine Zeitspanne mehrere Disparitätskarten (5) berechnet und miteinander verglichen werden, wobei ein Warnsignal nur ausgegeben wird, wenn der vorgegebene Schwellwert gültiger Disparitätswerte in einer vorbestimmten Anzahl berechneter Disparitätskarten (5) unterschritten wird.

10. Kamerasystem mit Mitteln zur Durchführung eines Verfahrens nach einem der vorhergehenden Ansprüche, umfas send eine Stereokamera (1) mit mindestens zwei Objektiven (7, 8) und Bildsensoren zum Aufnehmen der mindestens zwei Teilbilder (2, 3), eine Auswerteeinheit zum Erstellen eines Tiefenbildes sowie zum Berechnen der Disparitätswerte und ei ne Ausgabeeinheit zum Ausgeben des Warnsignals.

11. Kamerasystem nach Anspruch 10,
**dadurch gekennzeichnet, dass**
es ein Personenzählsystem oder ein anderes Überwachungssystem mit automatischer Bildauswertung ist.

## Claims

1. A method of optical self-diagnosis of a camera system for recording stereo images obtained from at least two partial images (2, 3) in each case, which comprises the following steps:
a. recording at least one first partial image (2) and a second partial image (3) of an object space complementary to the first partial image (2) with the camera system from different perspectives;
b. producing a depth image from said first partial image (2) and said second partial image (3) on the basis of parallax between mutually corresponding pixels from said partial images, wherein disparity values are determined as a measure for said parallax;
c. determining a number of valid disparity values (6) of the depth image, wherein a valid disparity value is defined as a disparity value which is determined for two pixels of the partial images (2, 3) assigned to one another, which are identified as mutually corresponding either unequivocally or at least with a defined probability;
d. outputting a warning signal depending on the number of said valid disparity values.

2. The method according to claim 1, **characterized in that** said depth image is a disparity map, which is produced by carrying out a matching method (4) in which said disparity values are determined as a measure for the parallax between the corresponding pixels of the two partial images (2, 3) by allocating pixels of the first partial image (2) to corresponding pixels of the second partial image (3).

3. The method according to claim 1, **characterized in that** a comparison of the number of valid disparity values is performed with a predetermined threshold value, wherein the warning signal is output when the number falls beneath the predetermined threshold.

4. The method according to claim 1 to 3, **characterized in that** an installation phase is provided in which a calibration of parameters used for optical self-diagnosis of the camera system takes place.

5. The method according to claim 3 and 4, **characterized in that** in the installation phase the calibration is performed in such a manner that an average number of valid disparity values is determined on the basis of a test object, wherein the threshold value is calculated by means of the number of valid disparity values thus determined.

6. The method according to claim 5, **characterized in that** said threshold value is calculated by multiplying said average number of valid disparity values, determined in the installation phase, with a factor which is greater than 0.

7. The method according to one of the preceding claims, **characterized in that** said recording of the at least two partial images (2, 3) of the object space from different perspective is accomplished simultaneously.

8. The method according to one of the preceding claims, **characterized in that** said matching method (4) comprises a Fourier transformation.

9. The method according to one of the preceding claims, **characterized in that** a plurality of disparity maps (5) are calculated and compared with each other over a period of time, wherein a warning signal is only output when the number of valid disparity values fall beneath the predetermined threshold value in a number of calculated disparity maps (5).

10. A camera system having means for carrying out a method according to one of the preceding claims, comprising:
a stereo camera (1) with at least two lenses (7, 8) and image sensors for recording the at least two partial images (2, 3), an evaluation unit to produce a depth image and to calculate the disparity values, and
an output unit to output the warning signal.

11. The camera system according to claim 10, **characterized in that** it is a person-counting system or another monitoring system with automatic image evaluation.

## Revendications

1. Procédé de diagnostic optique automatique d'un système de caméra pour la prise de vue de photos stéréo obtenues chacune à partir d'au moins deux photos partielles (2, 3), lequel comporte les étapes suivantes :
a. Prise de vue d'au moins une première photo partielle (2) et d'une deuxième photo partielle (3) complémentaire de la première photo partielle (2) d'un espace d'objet avec le système de caméra depuis plusieurs perspectives.
b. Réalisation d'une photo en profondeur à partir de la première photo partielle (2) et de la deuxième photo partielle (3) au moyen de parallaxes entre des points d'image parallèles des photos partielles, sachant des coefficients de disparité sont définis comme cote pour la parallaxe.
c. Détermination d'un nombre valable de coefficients de disparité (6) de l'image en profondeur, sachant qu'un coefficient de disparité valable est défini comme coefficient de disparité établi pour deux points d'image conjugués des photos partielles (2, 3), points qui sont clairement ou du moins selon une certaine probabilité identifiés comme parallèles ;
d. Émission d'un signal d'alerte en fonction du nombre des coefficients de disparité valables définis.

2. Procédé selon la revendication 1,
**caractérisé en ce que**
l'image en profondeur est une carte de disparité établie à partir d'un procédé de matching (4) au cours duquel des coefficients de disparité sont définis comme cote pour les parallaxes entre les points d'image parallèles des deux photos partielles (2, 3) en conjuguant des points d'image de la première photo partielle (2) avec des points d'images parallèles de la deuxième image partielle (3).

3. Procédé selon la revendication 1,
**caractérisé en ce que**
le nombre de coefficients de disparité valables est comparé à un coefficient seuil prédéfini, sachant que le signal d'alerte est émis lorsque ce nombre est inférieur au coefficient seuil prédéfini.

4. Procédé selon les revendications 1 à 3,
**caractérise en ce que**
il est prévu une phase d'installation au cours de laquelle les paramètres utilisés pour le diagnostic automatique du système de caméra sont étalonnés.

5. Procédé selon les revendications 3 et 4,
**caractérise en ce que**
lors de la phase d'installation, l'étalonnage est effectué de telle sorte qu'un nombre moyen de coefficients de disparité est défini au moyen d'un objet test, sachant que le nombre de coefficients de disparité valables ainsi définis permet de calculer le coefficient seuil.

6. Procédé selon la revendication 5,
**caractérisé en ce que**
le coefficient seuil est calculé par multiplication du nombre moyen de coefficients de disparité valables définis lors de la phase d'installation par un facteur supérieur à zéro.

7. Procédé selon l'une des revendications précédentes,
**caractérise en ce que**
la prise de vue des deux photos partielles (2, 3) minimum de l'espace d'objet est effectuée à partir de plusieurs perspectives en même temps.

8. Procédé selon l'une des revendications précédentes,
**caractérisé en ce que**
le procédé de matching (4) englobe une transformation de Fourier

9. Procédé selon l'une des revendications précédentes,
**caractérisé en ce que**
sur une certaine période, des coefficients de disparité (5) sont calculés et comparés, sachant qu'un signal d'alerte n'est déclenché que lorsque le coefficient seuil prédéfini des coefficients de disparité valables est dépassé d'un certain nombre de cartes de disparité (5) prédéfinies.

10. Système de caméra avec des moyens de réalisation d'un procédé selon
l'une des revendications précédentes, comportant une caméra stéréo (1) avec au moins deux objectifs (7, 8) et des capteurs d'image pour la prise de vue des deux photos partielles (2, 3) minimum, une unité d'évaluation pour la réalisation d'une image en profondeur et pour le calcul des coefficients de disparité et une unité d'émission de signal d'alerte.

11. Système de caméra selon la revendication 10,
**caractérisé en ce que**
il consiste en un système de décompte des personnes ou en un autre système de surveillance avec évaluation automatique d'image.
